# EUROPEAN PATENT APPLICATION

(11) **EP 1 793 553 A1**
(43) Date of publication of application: **06.06.2007**
(21) Application number: 05292572.4
(22) Date of filing: 02.12.2005
(51) Int. Cl.: H04L 29/06, H04L 12/56

(54) **A transmission control protocol (TCP) host with TCP convergence module**

(71) Applicant: Alcatel Lucent, 75008 Paris (FR)
(72) Inventor: Tsang, Ing-Jyh, 2550 Kontich (BE); Van Leekwijck, Werner Adriaan Josephine, 2610 Antwerpen (BE); Gyselings, Tim, 2100 Deurne (BE)
(74) Representative: Narmon, Gisèle Marie Thérèse

(57) **Abstract**

A sending transmission control protocol (TCP) host is used in a first network node (106) to transmit TCP flows over a network segment to a receiving TCP host in a second network node (104). The sending TCP host comprises a TCP convergence module for aggregating all TCP flows through the network segment between the first network node (106) and the second network node (104) into an aggregate TCP flow (112). The receiving TCP host comprises a TCP convergence module for disaggregating the TCP flows from the aggregate TCP flow (112).

## Description

### Field of the Invention

The present invention generally relates to increasing the efficiency in transporting Transmission Control Protocol (TCP) flows through a network segment between a first network node and a second network node, which both incorporate a TCP host. The TCP host can be a TCP client, a TCP server or a TCP proxy. A TCP proxy is a server that acts as an intermediary between a client and another server called the destination server. Typically, TCP clients establish connections or TCP flows to the TCP proxy server, which then establishes connections to another TCP proxy server or the destination server. A TCP proxy thus terminates the TCP connection on one end and initiates the connection on the other end. The first and second network nodes can be any type of network equipment, including but not limited to subscriber terminals such as a Digital Subscriber Line (DSL) modem, a Set-Top Box (STB), an optical network terminals (ONT), access nodes such as a Digital Subscriber Line Access Multiplexer (DSLAM), a Digital Loop Carriers (DLC), a Cable Modem Termination System (CMTS), an optical fibre aggregator, a Broadband Access Server (BAS), routing nodes such as an edge IP router, a core IP router, a switch/router, etc.

### Background of the Invention

Internet traffic currently is dominated by TCP traffic. Some surveys show that TCP flows constitute 90% of the entire Internet traffic. Part of the TCP traffic concerns so called mice data traffic: TCP flows with a short duration that convey small amounts of data. Another part of the TCP traffic concerns the so-called elephant data traffic: TCP flows with a long duration that convey a large amount of data, such as multimedia downloads, etc. In current networks, mice data traffic typically suffers from unfair bandwidth share.

The widely used Reno variant of TCP is currently the dominant implementation in the Internet. The standard TCP or TCP Reno is defined in IETF RFC 1122. This RFC can be retrieved from the Internet via URL:
http://www.ietf.org/rfc/rfc1122.txt?number=1122

Although numerous more efficient TCP variants exist (like for instance TCP Fast, TCP Vegas, TCP Westwood,...), TCP Reno is not generally replaced by any of these more efficient TCP implementations because TCP Reno tends to starve these other variants. A survey of alternate TCP protocols is given in "A Survey of Transport Protocols other than Standard TCP" from the authors M. Goutelle et al. This publication can be retrieved via URL:
http://www-unix.gridforum.org/Meetings/ggf10/GGF10%20Documents/Servey%20DT-RG.pdf

The better performing TCP variants cannot coexist with TCP Reno because TCP Reno aggressively outperforms the other TCP variants in competing for bandwidth. This hinders the introduction of better performing TCP variants in public networks like the Internet where TCP Reno is already widely used. Use of the more efficient TCP variants currently is restricted to private networks where no TCP Reno is implemented. The article "Fairness Comparisons Between TCP Reno and TCP Vegas for Future Deployment of TCP Vegas" from the authors Kenji Kurata, Go Hasegawa and Masayuki Murata for instance concludes that it is unlikely that TCP Vegas will penetrate the Internet although it is one of the most promising TCP mechanisms because of its high performance resulting from an enhancement of the congestion avoidance algorithm of TCP Reno. The reason is that in a situation where a TCP Vegas connection and a TCP Reno connection have to co-exist in the network, the TCP Vegas connection may suffer from significant unfairness. The entire article comparing the congestion avoidance algorithms of TCP Reno and TCP Vegas and containing the results of the author's research on situations where TCP Reno and TCP Vegas connections share a link can be downloaded via the URL:
http://www.nal.ics.es.osaka-u.ac.jp/achievements/web1999/papers/k-kurata/k-kurata00inet-ComparisonsRenoVegas.pdf

Another publication from 11 March 2005, "Equilibrium and Fairness of Networks Shared by TCP Reno and Vegas/FAST" from the authors Ao Tang, Jiantao Wang, Sanjay Hegde and Steven H. Low, demonstrates that any target inter-protocol fairness between TCP Reno and TCP Fast can be achieved in principle by an appropriate choice of the TCP Fast parameters. The article however concludes that it is unclear how the parameter values have to be computed in practice, thus leaving fair co-existence of TCP Reno and TCP Fast on a shared link a theoretical possibility rather than a feasible practice. This publication from Tang et al. is available through the Internet via URL:
http://www.sisl.caltech.edu/pubs/equilibrium.pdf

In conventional TCP implementations, a TCP source (or client) opens a socket for each TCP flow and establishes an end-to-end connection between the TCP source and a destination. The standard TCP protocol, i.e. TCP Reno, will then pass through the usual procedure: a three-way handshaking, slow start and congestion control (congestion avoidance, fast retransmit and fast recovery). As soon as all data are transmitted, the TCP closure procedure is initiated. The different phases of standard TCP (TCP Reno) are described in detail in IETF RFC 2001, which can be retrieved from the Internet via URL:
http://www.ietf.org/rfc/rfc2001.txt?number=2001

Since the number of peer-to-peer connections is rapidly increasing due to the success of peer-to-peer applications, also the number of TCP connections and consequently the amount of data that is transported on low transmission regime (because it has to pass through phases like slow start and congestion control) is increasing quickly. Indeed, the Internet has been undergoing some fundamental changes, from an upgrade of the access infrastructure to changes in the way the Internet is used. New applications like peer-to-peer communications, VoIP, and IPTV, and the increase in mice data traffic require changes on the data and transport structure of the overall network. However, mechanisms such as TCP. Reno that have been the backbone of the Internet for many years, have been unable to evolve efficiently to take advantage of the changes in the Internet infrastructure and usage.

An object of the present invention is to disclose TCP sending and receiving hosts as well as a method for transceiving TCP flows that remove the inefficiencies of the current TCP implementation, in particular in handling the increased number of connections resulting from new applications like peer-to-peer communication, and in transporting mice data traffic which are treated unfairly by the current TCP protocol.

It is a further object of the current invention to enable the introduction of TCP variants that are better performing than TCP Reno in public networks where such new variants - at least temporarily - will have to coexists with TCP Reno without being bandwidth-starved.

### Summary of the Invention

The above objectives are achieved through the sending TCP host defined by claim 1, the receiving TCP host defined by claim 8, and the method for transceiving TCP flows defined by claim 9.

Indeed, by aggregating or multiplexing all TCP flows that pass through a network segment between the sending TCP host (a client or proxy) and receiving TCP host (a proxy or destination server), all TCP data packets are transported over a single TCP connection wherein the fairness between the aggregated flows can be controlled by the TCP convergence module. Thanks to the aggregation of the TCP flows in the network segment between the network elements incorporating the sending and receiving TCP hosts according to the present invention, there will be no bandwidth competition amongst the TCP flows. The aggregation gives a better chance to mice data traffic because the mice data will be transported on higher congestion windows in the network segment that operates according to the invention. An additional advantage of the current invention is that by segmenting the path, the data transported in this network segment terminated by the sending and receiving TCP hosts according to the current invention will be ruled by the traffic between the end points of that segment and not by the overall traffic conditions. Thus, even if congestion happens in another segment of the path, the TCP packets aggregated in the aggregate TCP connection on the network segment operating according to the current invention will not be affected and can still be transported in the most effective way. Further, the single TCP connection wherein all flows are aggregated might be using a better variant of TCP, such as TCP Vegas or TCP Fast, because no TCP Reno connection will coexist together with the aggregate TCP flow on the network segment and hence there is no risk for the aggregate TCP flow to be treated unfair or to become bandwidth starved. Thus, the present invention allows transparent use of a better TCP implementation, meaning that it will not disturb the conventional TCP traffic present in the network.

An additional, optional feature of the sending TCP host according to the current invention is defined by claim 2. When the aggregate TCP flow is of a TCP implementation different from TCP Reno, the network segment conveying the aggregate TCP flow will obviously benefit from the better performance of that TCP variant. The choice of the TCP implementation can for instance be made according to the physical characteristics of the network segment. Such introduction of better performing TCP implementations was unrealistic to happen without the current invention because all TCP Reno connections would have to be replaced with the better performing TCP variant at the same time, or a new, better performing TCP variant able to compete or coexists with TCP Reno would have to be developed.

Another additional, optional feature of the sending TCP host according to the current invention is defined by claim 3. Indeed, in case of a high speed, high capacity network segment, the TCP Fast implementation could be chosen for the aggregate TCP flow since this TCP implementation is optimized for such network characteristics.

Another additional, optional feature of the sending TCP host according to the current invention is defined by claim 4. Indeed, in case of a network segment where enhanced congestion anticipation from the source side is preferred, the TCP Vegas implementation could be chosen for the aggregate TCP flow since this TCP implementation was designed thereto. Instead of using packet loss as a measure for congestion, the TCP Vegas source will monitor the difference between the rate it is expecting to see and the rate it is actually realising. TCP Vegas' strategy is to adjust the source's sending rate in an attempt to keep a small number of packets buffered in the network elements along the path.

Another additional, optional feature of the sending TCP host according to the current invention is defined by claim 5. Indeed, in case of a wireless network segment, the TCP Westwood implementation could be chosen for the aggregate TCP flow since this TCP implementation is optimized for wireless links.

A further optional feature of the sending TCP host according to the current invention is that the aggregate TCP flow might be a TCP Reno flow, as defined by claim 6. This is so because even in case the aggregate TCP flow is a TCP Reno flow, certain advantages and objectives of the current invention will still be realised. For instance, it will be possible to control the bandwidth allocation to the different TCP flows from the TCP convergence module and as a result there will be no bandwidth competition amongst the TCP flows on the network segment. Also, the advantages related to the segmentation, i.e. the independence of congestion that occurs in other network segments, remain.

As indicated by claim 7, a further optional feature of the sending TCP host according to the current invention is that its TCP convergence module controls the bandwidth allocation for each TCP flow aggregated in the aggregate TCP flow. As a consequence, there will be less congestion implying that the TCP mechanism according to the present invention will operate less on the low transmission regime such as the slow start and congestion avoidance phases.

### Brief Description of the Drawings

Fig. 1 illustrates a network wherein embodiments of the method for transceiving TCP flows according to the current invention is implemented on different network segments;
Fig. 2 illustrates a DSLAM incorporating embodiments of the sending and receiving TCP hosts according to the current invention on its linecards.

### Detailed Description of Embodiment(s)

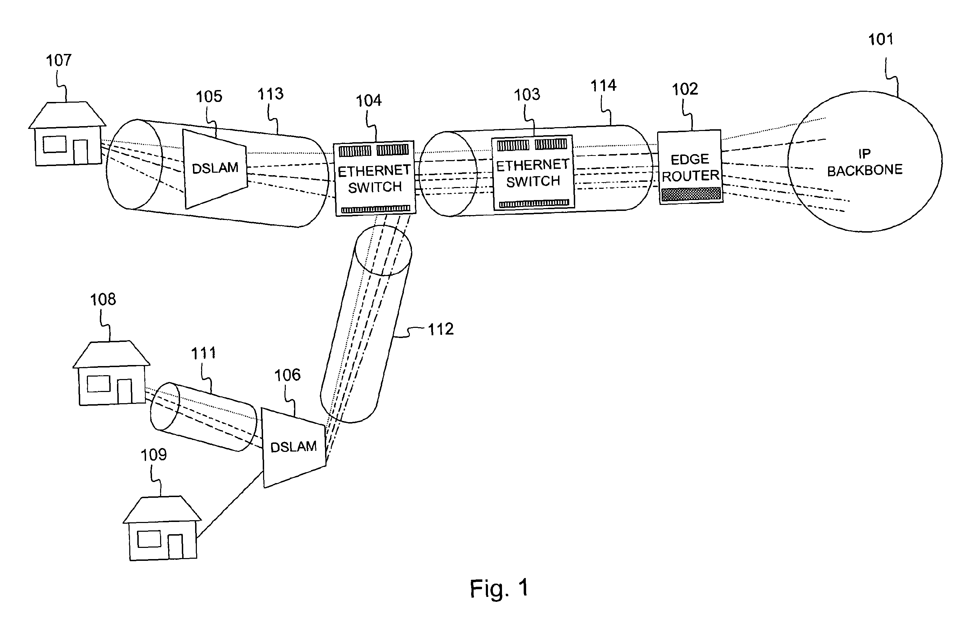

In the network drawn in Fig. 1 customer premises 107 are connected via an Asymmetric Digital Subscriber Line (ADSL) to a first Digital Subscriber Line Access Multiplexer (DSLAM) 105. Similarly, the customer premises 108 and 109 are connected via respective ADSL loops with a second DSLAM 106. This is the access part of the network depicted in Fig. 1. In the aggregation part of the network, the first and second DSLAMs, 105 and 106, are connected to an Ethernet switch 104. This Ethernet switch couples with an IP backbone 101 via a second Ethernet switch 103 and an IP edge router 102.

Fig. 1 further shows a number of aggregate TCP flows or TCP aggregation tunnels operating according to the current invention. The first aggregate TCP flow 111 is a user-to-DSLAM tunnel between the customer premises 108 and the DSLAM 106. All TCP flows between the user or customer premises 108 and the DSLAM 106 are aggregated in a single, aggregate TCP flow 111, for instance a TCP Fast flow. The TCP host in the ADSL CPE modem at the customer premises 108 thereto has a TCP convergence module that multiplexes the TCP packets belonging to different flows into a single TCP Fast connection 111. Thus, when applications at the user's side 108 open TCP sockets, the TCP convergence module will buffer the TCP packets and send them to the DSLAM 106 using a specific TCP socket. This specific TCP socket will be a layer on top of the conventional TCP sockets, but using a more effective TCP implementation such as TCP Fast. Since all the traffic between the customer premises 108 and the DSLAM 106 will pass through the same TCP convergence module and same aggregate TCP flow 111, there will be no problem of mixing traffic of a TCP Reno flow with traffic of other TCP implementations. The TCP convergence module further controls the allocation of bandwidth available within the aggregate TCP Fast connection 111 amongst the different TCP flows that are multiplexed therein. The disaggregating point, i.e. the DSLAM 106, has TCP hosts on its linecards with a TCP convergence module able to perform the reverse operation. The TCP convergence module on the DSLAM linecards in other words demultiplexes the packets belonging to different TCP flows from the aggregate TCP Fast flow 111. Note that as an alternative, the TCP convergence module in the DSLAM 106 might be implemented on the network termination card (NT) instead of the linecards (LTs).

For the forwarding of TCP flows from DSLAM 106 to the next network element, i.e. the Ethernet switch 104 in Fig. 1, a second aggregate TCP tunnel 112 is configured. A TCP convergence module that forms part of the TCP host on the NT of DSLAM 106 thus aggregates all TCP flows, typically conveying TCP packets from different users like 108 and 109, in a single aggregate TCP pipe that is terminated on a disaggregating TCP convergence module in the Ethernet switch 104.

Yet another aggregate TCP tunnel shown in Fig. 1 is the user-to-Ethernet switch tunnel 113. Therein, all the TCP flows established by for instance the PC at the user location 107 are aggregated and transported through DSLAM 105 to Ethernet switch 104 via a specific TCP connection 113. The TCP packets coming from user 107 are then disaggregated at Ethernet switch 104 in a TCP convergence module foreseen there.

A last aggregate TCP tunnel drawn in Fig. 1 is the Ethernet switch to edge router tunnel 114 wherein all the TCP packets are aggregated that need to be transported between Ethernet switch 104 and edge router 102. This fourth aggregate TCP tunnel 114 transparently passes through the second Ethernet switch 103 and is terminated on a TCP convergence module inside edge router 102, which disaggregates the TCP packets and forwards the TCP packets to the next network element in the IP backbone 101 using the conventional mechanisms.

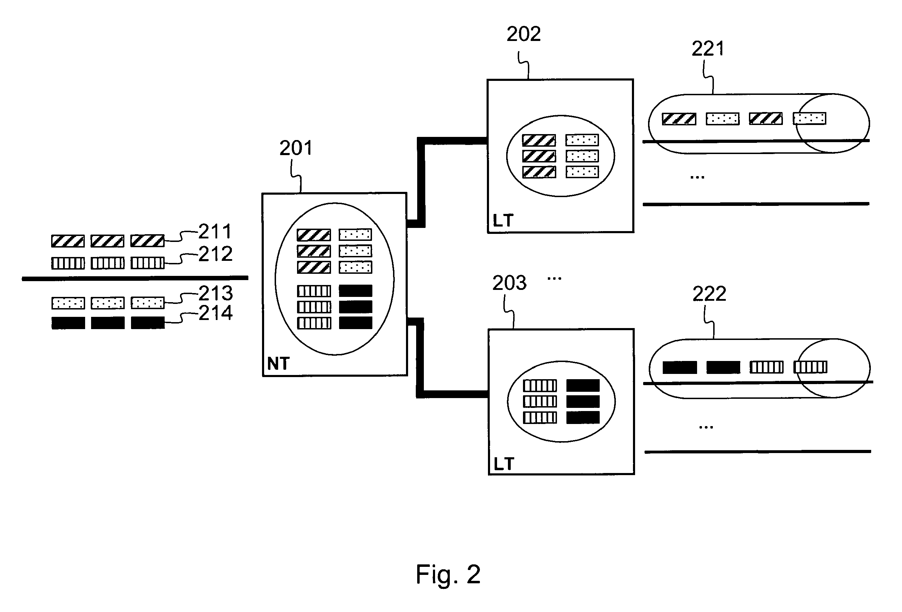

Fig. 2 shows some more detail of a DSLAM like DSLAM 106 in Fig. 1, having TCP hosts according to the current invention on its linecards, 202 and 203. Linecard 202 for instance has a TCP host with a TCP convergence module that terminates an aggregate TCP flow 221 wherein the TCP packets of two different TCP flows are aggregated, for instance a TCP Reno and a TCP Fast connection coming from different applications running on a user's PC. The packets belonging to the two TCP flows are disaggregated by the TCP convergence module on linecard 202 and forwarded via an internal bus or point-to-point connection to the network termination board 201. In a similar fashion, the line termination 203 has a TCP host with TCP convergence module that disaggregates the TCP packets from two other TCP flows that were multiplexed in a single, aggregate TCP tunnel 222. After being demultiplexed, the packets from those two TCP flows are also forwarded via the internal bus or point-to-point connection to the network termination 201. Network termination 201 might forward the TCP packets to the next network element in the aggregation network using the conventional mechanisms, i.e. via 4 individual TCP flows 211, 212, 213 and 214, or alternatively the NT 201 could also be equipped with a TCP host which according to the current invention, aggregates the packets from the different TCP flows into a single aggregate TCP flow. The latter has the advantage that TCP flows of different types will not compete for bandwidth, and that the bandwidth allocation on the link to the next network element can be controlled.

Although the present invention has been illustrated by reference to specific embodiments, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example the context of ADSL and Ethernet were given only as an example. It will be clear to the person skilled in the art of designing telecom infrastructure that the current invention can be implemented on any network segment independent from the underlying physical layer and network layer technologies. Further, it is noted that also TCP Vegas, TCP Reno, TCP Westwood, etc. were only mentioned as example TCP variants that could be multiplexed into an aggregate TCP flow according to the current invention, or that could be used for the aggregate TCP flow itself. Numerous other TCP variants exist, some of which are described in the publications cited in the introductory part of this patent application. For all these variants, the current invention is applicable with same advantages.

## Claims

1. A transmission control protocol (TCP) host for use in a first network node (106) to transmit TCP flows to at least a second network node (104) over a network segment,
**CHARACTERIZED IN THAT** said TCP host comprises a TCP convergence module for aggregating all TCP flows through said network segment between said first network node (106) and said second network node (104) into an aggregate TCP flow (112).

2. A TCP host according to claim 1,
**CHARACTERIZED IN THAT** said aggregate TCP flow (112) is a TCP flow with higher performance than a TCP Reno flow.

3. A TCP host according to claim 2,
**CHARACTERIZED IN THAT** said aggregate TCP flow (112) is a TCP Fast flow.

4. A TCP host according to claim 2,
**CHARACTERIZED IN THAT** said aggregate TCP flow (112) is a TCP Vegas flow.

5. A TCP host according to claim 2,
**CHARACTERIZED IN THAT** said aggregate TCP flow (112) is a TCP Westwood flow.

6. A TCP host according to claim 1,
**CHARACTERIZED IN THAT** said aggregate TCP flow (112) is a TCP Reno flow.

7. A TCP host according to claim 2,
**CHARACTERIZED IN THAT** said TCP convergence module comprises means for controlling allocation of bandwidth available in said aggregate TCP flow (112) amongst said TCP flows aggregated in said aggregate TCP flow (112).

8. A transmission control protocol (TCP) host for use in a second network node (104) to receive TCP flows from at least a first network node (106) over a network segment,
**CHARACTERIZED IN THAT** said TCP host comprises a TCP convergence module for disaggregating all TCP flows through said network segment between said first network node (106) and said second network node (104) from an aggregate TCP flow (112).

9. A method for transceiving TCP flows between a first network node (106) and a second network node (104) over a network segment,
**CHARACTERIZED IN THAT** said method comprises the steps of aggregating in said first network node (106) all TCP flows through said network segment between said first network node (106) and said second network node (104) into an aggregate TCP flow (112), and disaggregating in said second network node (104) said TCP flows from said aggregate TCP flow (112).

## Amended claims

### Amended claims in accordance with Rule 86(2) EPC.

**1.** A transmission control protocol (TCP) host for use in a first network node (106) to transmit TCP flows to at least a second network node (104) over a network segment, said TCP host being adapted to support multiple TCP variants,
**CHARACTERIZED IN THAT** said TCP host comprises a TCP convergence module for aggregating all TCP flows through said network segment between said first network node (106) and said second network node (104) into an aggregate TCP flow (112), said TCP convergence module further comprising means for controlling allocation of bandwidth available in said aggregate TCP flow (112) amongst said TCP flows aggregated in said aggregate TCP flow (112).

**2.** A TCP host according to claim 1,
**CHARACTERIZED IN THAT** said aggregate TCP flow (112) is a TCP flow with higher performance than a TCP Reno flow.

**3.** A TCP host according to claim 2,
**CHARACTERIZED IN THAT** said aggregate TCP flow (112) is a TCP Fast flow.

**4.** A TCP host according to claim 2,
**CHARACTERIZED IN THAT** said aggregate TCP flow (112) is a TCP Vegas flow.

**5.** A TCP host according to claim 2,
**CHARACTERIZED IN THAT** said aggregate TCP flow (112) is a TCP Westwood flow.

**6.** A TCP host according to claim 1,
**CHARACTERIZED IN THAT** said aggregate TCP flow (112) is a TCP Reno flow.

**7.** A transmission control protocol (TCP) host for use in a second network node (104) to receive TCP flows from at least a first network node (106) over a network segment, said TCP host being adapted to support multiple TCP variants,
**CHARACTERIZED IN THAT** said TCP host comprises a TCP convergence module for disaggregating all TCP flows through said network segment between said first network node (106) and said second network node (104) from an aggregate TCP flow (112).

**8.** A method for transceiving TCP flows between a first network node (106) and a second network node (104) over a network segment, supporting multiple TCP variants,
**CHARACTERIZED IN THAT** said method comprises the steps of aggregating in said first network node (106) all TCP flows through said network segment between said first network node (106) and said second network node (104) into an aggregate TCP flow (112), controlling allocation of bandwidth available in said aggregate TCP flow (112) amongst said TCP flows aggregated in said aggregate TCP flow (112), and disaggregating in said second network node (104) said TCP flows from said aggregate TCP flow (112).
